# EUROPEAN PATENT APPLICATION

(11) **EP 2 372 870 A1**
(43) Date of publication of application: **05.10.2011**
(21) Application number: 09830351.4
(22) Date of filing: 27.11.2009
(51) Int. Cl.: H02J 17/00

(54) **NON-CONTACT POWER TRANSMISSION APPARATUS AND DESIGN METHOD**

(30) Priority: 01.12.2008 JP 2008306171
(71) Applicant: Kabushiki Kaisha Toyota Jidoshokki, Kariya-shi Aichi 448-8671 (JP); Toyota Jidosha Kabushiki Kaisha, Toyota-shi, Aichi 471-8571 (JP)
(72) Inventor: SAKODA, Shimpei, Kariya-shi Aichi 448-8671 (JP); SUZUKI, Sadanori, Kariya-shi Aichi 448-8671 (JP); TAKADA, Kazuyoshi, Kariya-shi Aichi 448-8671 (JP); NAKATA, Kenichi, Kariya-shi Aichi 448-8671 (JP); YAMAMOTO, Yukihiro, Kariya-shi Aichi 448-8671 (JP); ICHIKAWA, Shinji, Toyota-shi Aichi 471-8571 (JP); ISHIKAWA, Tetsuhiro, Toyota-shi Aichi 471-8571 (JP)
(74) Representative: TBK
(86) International application number: PCT/JP2009/070039
(87) International publication number: WO 2010/064584

(57) **Abstract**

A non-contact power transmission apparatus is disclosed. The non-contact power transmission apparatus includes an alternating-current power source and a resonant system. The resonant system includes a primary coil connected to the alternating-current power source, a primary-side resonance coil, a secondary-side resonance coil, and a secondary coil is connected to a load. The apparatus also has a first capacitor and a second capacitor. A first resonant frequency, which is a resonant frequency of the primary-side resonance coil and the first capacitor, and a second resonant frequency, which is a resonant frequency of the secondary-side resonance coil and the second capacitor, are set to be equal to each other. The frequency of an alternating voltage of the alternating-current power source is set to match with the first resonant frequency and the second resonant frequency.

## Description

### TECHNICAL FIELD

The present invention relates to a non-contact power transmission apparatus and a method for designing such an apparatus, and more particularly to a resonance type non-contact power transmission apparatus and a method for designing such an apparatus.

### BACKGROUND ART

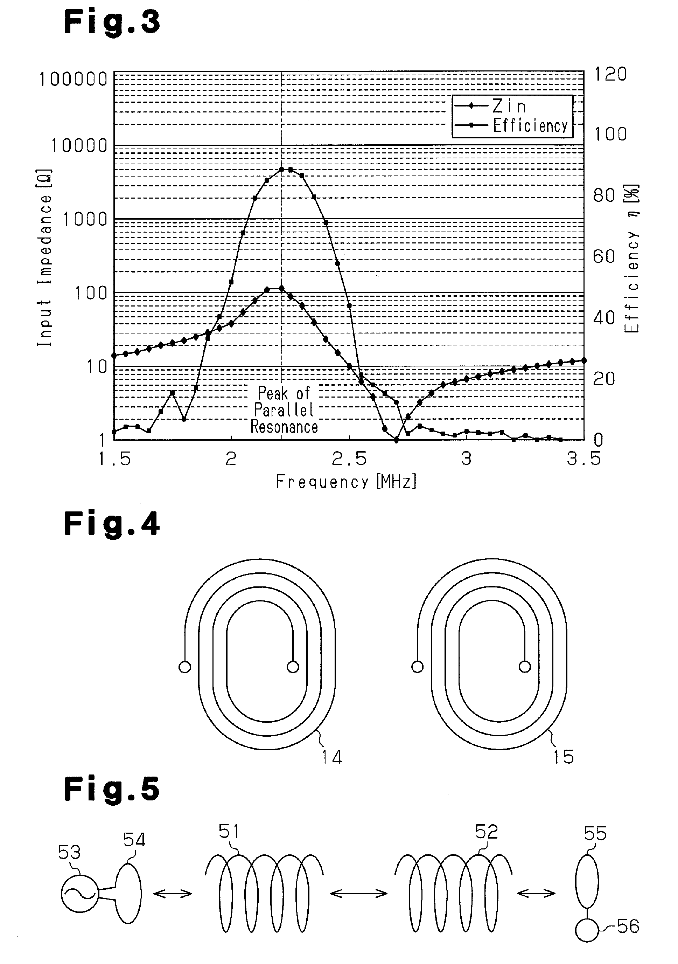

Fig. 5 schematically shows a non-contact power transmission apparatus that wirelessly transmits power from a first copper wire coil 51 to a second copper wire coil 52, which is separated from the first copper wire coil 51, by using resonance of an electromagnetic field. Such devices are disclosed in, for example, Non-Patent Document 1 and Patent Document 1. In Fig. 5, a magnetic field generated at a primary coil 54 connected to an alternating-current power source 53 is intensified by means of magnetic field resonance of the first and second copper wire coils 51, 52. The effect of electromagnetic induction of the intensified magnetic field around the second copper wire coil 52 generates power in the secondary coil 55. The generated power is then supplied to a load 56. It has been confirmed that, when first and second copper wire coils 51, 52 having a radius of 30 cm were placed 2 m away from each other, 60-watt light as the load 56 was turned on.

### PRIOR ART DOCUMENTS

Patent Document
   Patent Document 1: International Publication WO2007/008646 A2
Non-Patent Document
   Non-Patent Document 1: NIKKEI ELECTRONICS Dec. 3, 2007, pages 117 to 128

### SUMMARY OF THE INVENTION

### Problems that the Invention is to Solve

In a resonance type non-contact power transmission apparatus shown in Fig. 5, both ends of the copper wire coils 51, 52, which are resonance coils, are open. The resonant frequency of the resonant system is therefore determined by the inductance and the stray capacitance of the first and second copper wire coils 51, 52. It is thus difficult to predict the resonant frequency of the resonant system. The resonant frequency can only be obtained by actually measuring it. To efficiently supply power of an alternating-current power source 53 to a load 56 in the resonance type non-contact power transmission apparatus, the alternating-current power source 53 needs to output alternating voltage at a frequency that is adapted for the resonant frequency of the resonant system. However, it is troublesome to actually measure the resonant frequency of the resonant system. For example, when designing a non-contact power transmission apparatus such that an alternating-current power source outputs alternating voltage having a specific frequency, for example, in the industrial, scientific and medical (ISM) radio band, the apparatus is manufactured with provisional specifications. Then, the resonant frequency of the resonant system is actually measured, and it is determined whether the measured resonant frequency can be adapted for a desired resonant frequency.
If such adaptation cannot be achieved, the specifications for the resonance coils need to be changed. This adds extra labor.

Accordingly, it is an objective of the present invention to provide a non-contact power transmission apparatus and a method for designing such an apparatus that are capable of, without actually measuring the resonant frequency of the resonant system, setting the resonant frequency of a resonant system to a desired resonant frequency and efficiently supplying the power of an alternating-current power source to a load.

To achieve the above objective, one aspect of the present invention provides a non-contact power transmission apparatus, which includes an alternating-current power source and a resonant system. The resonant system includes a primary coil connected to the alternating-current power source, a primary-side resonance coil, a secondary-side resonance coil, and a secondary coil to which a load is connected. The apparatus includes a first capacitor and a second capacitor. The first capacitor is connected in parallel to the primary-side resonance coil. The second capacitor is connected in parallel to the secondary-side resonance coil. A first resonant frequency, which is a resonant frequency of the primary-side resonance coil and the first capacitor, and a second resonant frequency, which is a resonant frequency of the secondary-side resonance coil and the second capacitor, are set to be equal to each other. The frequency of an alternating voltage of the alternating-current power source is set to match with the first resonant frequency and the second resonant frequency.

Another aspect of the present invention provides a method for designing a non-contact power transmission apparatus comprising an alternating-current power source and a resonant system. The resonant system includes a primary coil connected to the alternating-current power source, a primary-side resonance coil, a secondary-side resonance coil, and a secondary coil to which a load is connected. The method includes: connecting in parallel a first capacitor to the primary-side resonance coil; connecting in parallel a second capacitor to the secondary-side resonance coil; setting, to be equal to each other, a first resonant frequency, which is a resonant frequency of the primary-side resonance coil and the first capacitor, and a second resonant frequency, which is a resonant frequency of the secondary-side resonance coil and the second capacitor; setting the specifications of the primary-side and secondary-side resonance coils and the specifications of the first and second capacitors; calculating the first and second resonant frequencies; and adjusting the frequency of an output voltage of the alternating-current power source to match with the first and second resonant frequencies.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic diagram illustrating a non-contact power transmission apparatus according to one embodiment of the present invention;
Fig. 2 is a graph showing the relationship among the input impedance and power transmission efficiency of a resonant system, and the frequency of the alternating voltage of an alternating-current power source in a case where no capacitor is connected to each resonance coil;
Fig. 3 is a graph showing the relationship among the input impedance and power transmission efficiency of a resonant system, and the frequency of the alternating voltage of an alternating-current power source in a case where a capacitor is connected to each resonance coil;
Fig. 4 is a schematic diagram illustrating a primary-side resonance coil and a secondary-side resonance coil according to a modified embodiment; and
Fig. 5 is a schematic diagram illustrating a conventional non-contact power transmission device.

### MODE FOR CARRYING OUT THE INVENTION

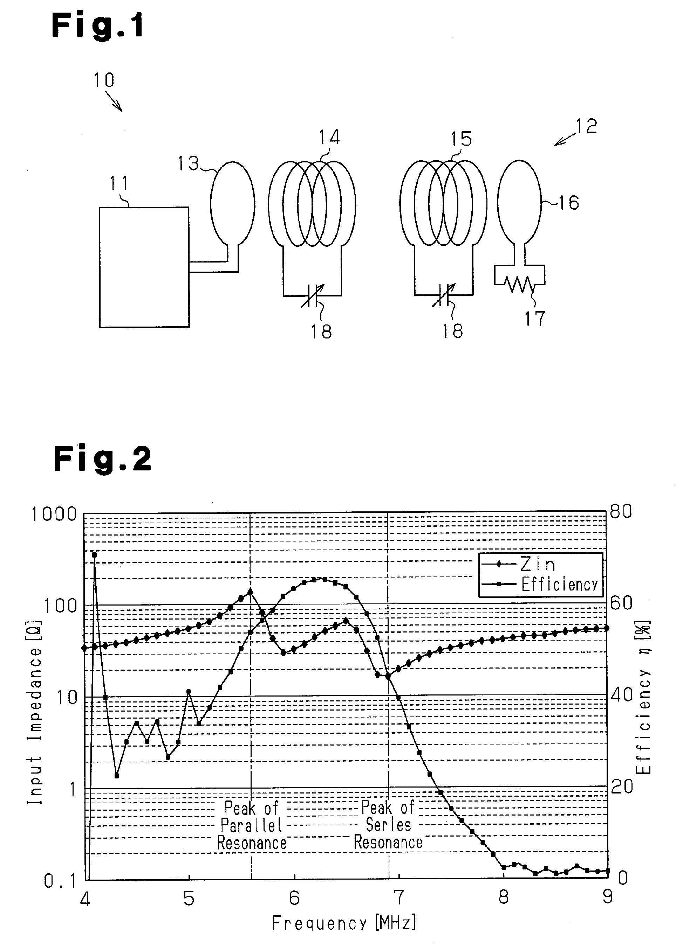

A non-contact power transmission apparatus 10 according to one embodiment of the present invention will now be described with reference to Figs. 1 to 3.

As shown in Fig. 1, the non-contact power transmission apparatus 10 includes a resonant system 12, which transmits power supplied from an alternating-current power source 11 to a load 17 without contact. The resonant system 12 includes a primary coil 13 connected to the alternating-current power source 11, a primary-side resonance coil 14, a secondary-side resonance coil 15, and a secondary coil 16. The secondary coil 16 is connected to the load 17. The alternating-current power source 11 supplies an alternating voltage to the primary coil 13. The alternating-current power source 11 may receive direct voltage supplied by a direct-current power source, convert the direct voltage to an alternating voltage, and supply the alternating voltage to the primary coil 13. The frequency of the alternating voltage output by the alternating-current power source 11 can be arbitrarily changed.

A capacitor 18 is connected in parallel to each of the primary-side resonance coil 14 and the secondary-side resonance coil 15. The resonant frequency (first resonant frequency) of the primary-side resonance coil 14 and the capacitor 18 connected to the primary-side resonance coil 14, and the resonant frequency (second resonant frequency) of the secondary-side resonance coil 15 and the capacitor 18 connected to the secondary-side resonance coil 15 are set to be equal to each other. Hereinafter, the capacitor 18 that is connected in parallel to the primary-side resonance coil 14 will be referred to as a first capacitor 18, and the capacitor 18 that is connected in parallel to the secondary-side resonance coil 15 will be referred to as a second capacitor 18. The primary-side resonance coil 14 and the secondary-side resonance coil 15 have the same specification. The capacitors 18 are variable capacitors and adjusted to have the same capacitance value. The frequency of the output voltage of the alternating-current power source 11 is set to match with the resonant frequency of the primary-side resonance coil 14 and the first capacitor 18, and the resonant frequency of the secondary-side resonance coil 15 and the second capacitor 18.

The non-contact power transmission apparatus 10 applies alternating voltage from the alternating-current power source 11 to the primary coil 13, thereby generating a magnetic field at the primary coil 13. The non-contact power transmission apparatus 10 intensifies the magnetic field generated at the primary coil 13 by means of magnetic field resonance of the primary-side resonance coil 14 and the secondary-side resonance coil 15, thereby generating power in the secondary coil 16 through the effect of electromagnetic induction of the intensified magnetic field around the secondary-side resonance coil 15. The generated power is then supplied to a load 17.

The primary coil 13, the primary-side resonance coil 14, the secondary-side resonance coil 15, and the secondary coil 16 are each formed by an electric wire. The electric wires forming the coils 13, 14, 15, 16 are, for example, wires coated with insulation vinyl. The diameter and the number of turns of the coils 13, 14, 15, 16 are determined in accordance with, for example, the level of power to be transmitted as required. In the present embodiment, the primary coil 13, the primary-side resonance coil 14, the secondary-side resonance coil 15, and the secondary coil 16 have the same diameter.

A method for designing and manufacturing the non-contact power transmission apparatus 10 will now be described.

First, the specifications for the primary-side resonance coil 14 and the secondary-side resonance coil 15, which form the resonant system 12, are determined. In addition to the material of the electric wires forming the primary-side and secondary-side resonance coils 14, 15, the specifications include values that need to be determined when producing and installing the resonance coils 14, 15, such as the size of the wires, the diameter of the coils, the number of turns, the distance between the resonance coils 14, 15. Next, the specifications for the primary coil 13 and the secondary coil 16 are determined. The specifications include, besides the material of the electric wire forming the coils 13, 16, the size of the electric wire, and the diameter and the number of turns of the coils. A copper wire is generally used as the electric wire.

Next, the resonant frequency of the resonant system 12 is determined. As the resonant frequency, a frequency in a range from 2 to 7 MHz is used. A capacitor 18 is connected in parallel to each of the primary-side resonance coil 14 and the secondary-side resonance coil 15, the specifications of which are determined as described above. Thereafter, capacitance values of the capacitors 18 are calculated such that the resonant frequency of the primary-side resonance coil 14 and the first capacitor 18 and the resonant frequency of the secondary-side resonance coil 15 and the second capacitor 18 match with the intended resonant frequency for the resonant system 12. The capacitance values of the capacitors 18 are adjusted to match with the calculated capacitance value, so that the design of the non-contact power transmission apparatus 10 is completed. This method for designing is based on a first finding in experiments by the inventors that when a capacitor 18 is connected in parallel to each of resonance coils (the primary-side resonance coil 14 and the secondary-side resonance coil 15), the resonant frequency of the resonant system 12 approximately matches with the resonant frequency of the primary-side resonance coil 14 and the first capacitor 18 and the resonant frequency of the secondary-side resonance coil 15 and the second capacitor 18, and on a second finding that the power transmission characteristics of the entire resonant system 12 are not influenced by the impedance of the primary coil 13.

Figs. 2 and 3 show graphs of measurement results that support the first finding. Figs. 2 and 3 show measurement results of the input impedance Zin and the power transmission efficiency η when a resistor having a resistance value of 50 Ω was connected to the secondary coil 16 as the load 17, and the frequency of a sine wave alternating voltage supplied from the alternating-current power source 11 to the primary coil 13 was changed. Fig. 2 shows the measurement results when no capacitors 18 were connected to the primary-side resonance coil 14 or the secondary-side resonance coil 15. Fig. 3 shows the measurement results when a capacitor 18 was connected to each of the primary-side resonance coil 14 and the secondary-side resonance coil 15.

Each of the coils 13, 14, 15, and 16, which formed the resonant system 12, was formed by a thin vinyl insulated low voltage wire for automobiles (AVS wire) having a size (cross-sectional area) of 0.5 sq (square mm). Also, the primary coil 13, the primary-side resonance coil 14, the secondary-side resonance coil 15, and the secondary coil 16 were formed in accordance with the following specifications.

The primary coil 13 and the secondary coil 16: number of turns... 2, diameter... 300 mm, closely wound

The resonance coils 14, 15: number of turns... 45; diameter... 300 mm, closely wound

The distance between the primary-side resonance coil 14 and the secondary-side resonance coil 15: 200 mm

A sine wave alternating voltage of 10 Vpp (amplitude of 5 V) and having a frequency of 1 MHz to 7 MHz was supplied to the primary coil 13 from the alternating-current power source 11 as an input voltage.

The power transmission efficiency η represents the ratio of the power consumption at the load 17 to the input power to the primary coil 13, and is obtained according to the following equation when expressed as a percent.

The power transmission efficiency η = (power consumption at load)/(input power to the primary coil 13) x 100 [%]

As shown in Fig. 2, in the case where no capacitors 18 were connected to the resonance coils 14, 15, the input impedance Zin of the resonant system 12 changed to have two local maximum points and two local minimum points. Of the two local maximum points and the two local minimum points in the input impedance Zin, the local maximum point corresponding to a lower frequency of the input voltage (the alternating voltage of the alternating-current power source 11) represents a parallel resonance, and the local minimum point corresponding to a higher frequency of the input voltage represents a series resonance. The resonant frequency of the resonant system 12, that is, the frequency of the input voltage at which the power transmission efficiency η had a peak value is between the frequency corresponding to the local maximum point of the input impedance Zin that represents a parallel resonance and the frequency corresponding to the local minimum point of the input impedance Zin that represents a series resonance.

In contrast, as shown in Fig. 3, in the case where a capacitor 18 was connected to each of the resonance coils 14, 15, the input impedance Zin of the resonant system 12 changed to have one local maximum point and one local minimum point. The resonant frequency of the resonant system 12, that is, the frequency of the input voltage at which the power transmission efficiency η had a peak value substantially matched with the frequency of the input voltage corresponding to the local maximum point of the input impedance Zin that represents a parallel resonance. When similar measurement was performed by changing the resistance value of the load 17 connected to the secondary coil 16, similar results were obtained. Thus, if the frequency of the alternating voltage of the alternating-current power source 11 is set to match with the resonant frequency of the primary-side resonance coil 14 and the first capacitor 18, and with the resonant frequency of the secondary-side resonance coil 15 and the second capacitor 18, an alternating current can be sent to the load 17 at the resonant frequency of the resonant system 12 without measuring the resonant frequency of the resonant system 12. The resonant frequency of the resonant system 12 when a capacitor 18 was connected to each of the resonance coils 14, 15 was lower than that in the case where no capacitor 18 was connected.

When manufacturing the non-contact power transmission apparatus 10, the primary coil 13, the primary-side resonance coil 14, the secondary-side resonance coil 15, and the secondary coil 16 are formed in accordance with the determined specifications, and the resonant system 12 is assembled. Thereafter, the capacitance values of the capacitors 18 connected in parallel to the primary-side resonance coil 14 and the secondary-side resonance coil 15 are adjusted to become design capacitance values. The frequency of the alternating voltage of the alternating-current power source 11 applied to the primary coil 13 is set to match with the resonant frequency of the primary-side resonance coil 14 and the first capacitor 18 and the resonant frequency of the secondary-side resonance coil 15 and the second capacitor 18.

"The frequency of the alternating voltage of the alternating-current power source 11 is set to match with the resonant frequency of the primary-side resonance coil 14 and the first capacitor 18, and the resonant frequency of the secondary-side resonance coil 15 and the second capacitor 18" does not necessarily refer to a case where the frequency of the alternating voltage of the alternating-current power source 11 exactly match with the resonant frequency of the primary-side resonance coil 14 and the first capacitor 18, and the resonant frequency of the secondary-side resonance coil 15 and the second capacitor 18. For example, a difference between the frequency of the alternating voltage of the alternating-current power source 11 and the resonant frequency of the primary-side resonance coil 14 and the first capacitor 18 (or the resonant frequency of the secondary-side resonance coil 15 and the second capacitor 18) is permitted as long as the apparatus 10 can achieve a desired performance as a non-contact power transmission apparatus, for example, as long as the power transmission efficiency of the non-contact power transmission apparatus 10 is greater than or equal to 80%, or the reflected power from the primary coil 13 to the alternating-current power source 11 is less than or equal to 5%. For example, the difference between the frequency of the alternating voltage of the alternating-current power source 11 and the resonant frequency of the primary-side resonance coil 14 and the first capacitor 18 (or the resonant frequency of the secondary-side resonance coil 15 and the second capacitor 18) is preferably ±10% and more preferably ±5%, or ±500 kHz. In these cases, the frequencies are determined to be matched.

The present embodiment has the following advantages.
(1) The non-contact power transmission apparatus 10 has the alternating-current power source 11 and the resonant system 12, which includes the primary coil 13 connected to the alternating-current power source 11, the primary-side resonance coil 14, the secondary-side resonance coil 15, and the secondary coil 16, to which the load 17 is connected. A capacitor 18 is connected in parallel to each of the primary-side resonance coil 14 and the secondary-side resonance coil 15. The resonant frequency of the primary-side resonance coil 14 and the first capacitor 18, and the resonant frequency of the secondary-side resonance coil 15 and the second capacitor 18 are set to be equal to each other. The frequency of the alternating voltage of the alternating-current power source 11 is set to match with the resonant frequency of each resonance coil (each of the primary-side resonance coil 14 and the secondary-side resonance coil 15) and the corresponding capacitor 18. The resonant frequency of each of the resonance coils 14, 15 and the capacitor 18 can be calculated when the specifications of the primary-side resonance coil 14 and the secondary-side resonance coil 15 and the capacitance value of the capacitors 18 are determined. Therefore, power from the alternating-current power source 11 can be efficiently supplied to the load 17 without actually measuring the resonant frequency of the non-contact power transmission apparatus 10. When the non-contact power transmission apparatus 10 has to be designed under a condition where the specifications of the resonance coils 14, 15 and the frequency of the alternating voltage of the alternating-current power source 11 are fixed, it is possible to design the apparatus 10 by using capacitors 18 that have such capacitance values that make the resonant frequency of the resonance coils 14, 15 and the capacitors 18 match with the resonant frequency of the resonant system 12. Also, the design is facilitated when the resonant frequency of the resonant system 12 is set in an IMS band, which is mostly designed for the use of radio waves for purposes other than communications.
(2) Variable capacitors are used as the capacitors 18. When the non-contact power transmission apparatus 10 is manufactured under a condition where the specifications of the resonance coils 14, 15 and the frequency of the alternating voltage of the alternating-current power source 11 are fixed, the capacitors 18 need to be used that have such a capacitance value that the resonant frequency of the resonance coils 14, 15 and the capacitors 18 matches with the resonant frequency of the resonant system 12, in order to make the frequency of the alternating voltage match with the resonant frequency of the resonant system 12. However, if capacitors having a fixed capacitance value are used, there can be a case in which capacitors having a required capacitance value are not commercially available. If capacitors having a desired capacitance values are custom-ordered or manufactured as the capacitors 18, without using commercially available ones, the costs of the non-contact power transmission apparatus 10 will be increased. To avoid such an increase in the costs, the frequency of the alternating voltage of the alternating-current power source 11 or the specifications of the resonance coils 14, 15 need to be altered in accordance with the capacitance value of commercially available capacitors. However, if variable capacitors are used as the capacitors 18, the frequency of the alternating voltage of the alternating-current power source 11 can be made match with the resonant frequency of the resonance coils 14, 15 and the capacitors 18 by using commercially available variable capacitors. Also, when manufacturing non-contact power transmission apparatuses 10 having varied specifications of the resonance coils 14, 15, the capacitance value of variable capacitors 18 can be varied in accordance with the variation in the specifications of the resonance coils 14, 15. Therefore, it is not necessary to prepare capacitors having different capacitance values in accordance with the specification of the resonance coils 14, 15.
(3) When a capacitor 18 is connected to each of the primary-side resonance coil 14 and the secondary-side resonance coil 15, the resonant frequency of the resonant system 12 is lower than that in a case where no capacitor 18 is connected to the primary-side resonance coil 14 or the secondary-side resonance coil 15. Therefore, an inexpensive power source can be used as the alternating-current power source 11. If capacitors 18 are connected, the primary-side resonance coil 14 and the secondary-side resonance coil 15 can be reduced in size compared to a case where no capacitors 18 are connected.

The present invention is not limited to the above embodiment, but may be modified as follows.

The capacitors 18 do not need to be variable capacitors, but may be capacitors having fixed capacitance values. If capacitors having desired fixed capacitance values are commercially available, the costs of the non-contact power transmission apparatus 10 can be reduced compared to a case where variable capacitors are used.

The alternating-current power source 11 is not limited to the one that can freely change the frequency of the alternating voltage, but may be a power source that outputs an alternating voltage of a constant frequency.

In a case where the secondary coil 16 of the non-contact power transmission apparatus 10 is connected to a load 17 and the consumed power of the load 17 can be changed stepwise, the capacitance value of each capacitor 18 may be adjustable in accordance with the consumed power, which is changed stepwise.

When forming the coils 13, 14, 15, 16 by winding electric wires, the coils 13, 14, 15, 16 do not need to be cylindrical. For example, the coils may have a tubular shape with a simple cross-sectional shape such as a polygon including a triangle, a rectangle, and/or a hexagon. The coils may also have a cross-section of an asymmetrical figure.

The primary-side resonance coil 14 and the secondary-side resonance coil 15 are not limited to coils formed by winding an electric wire into a cylindrical shape, but may be formed, for example, by winding an electric wire into a spiral in a single plane as shown in Fig 4.

The coils 13, 14, 15, and 16 may each be configured such that an electric wire is closely wound so that each turn contacts the adjacent turn, or may be configured such that the electric wire is wound with a space between each adjacent pair of turns.

The primary coil 13, the primary-side resonance coil 14, the secondary-side resonance coil 15, and the secondary coil 16 do not need to have the same diameter. For example, the primary-side resonance coil 14 and the secondary-side resonance coil 15 may have the same diameter, and the primary coil 13 and the secondary coil 16 may be different from each other. Alternatively, the primary and secondary coils 13, 16 may have a different diameter from the diameter of the resonance coils 14, 15.

The electric wire forming the coils 13, 14, 15, 16 does not need to be a vinyl insulated wire, but may be an enamel wire. Alternatively, after winding a bare wire, the bare wire may be resin molded.

The wires forming the coils 13, 14, 15, 16 are not limited to common copper wires having a circular cross section, but may be flat copper wires having a rectangular cross section.

The material for the wires forming the coils 13, 14, 15, 16 do not need to be copper, but may be aluminum or silver.

Instead of forming the primary coil 13, the primary-side resonance coil 14, the secondary-side resonance coil 15, and the secondary coil 16 with wires, these coils may be formed by wiring patterns on substrates.

### DESCRIPTION OF THE REFERENCE NUMERALS

10... Non-contact power transmission apparatus, 11... Alternating-current power source, 12... Resonant system, 13... Primary coil, 14... Primary-side resonance coil, 15... Secondary-side resonance coil, 16... Secondary coil, 17... Load, 18... Capacitors.

## Claims

1. A non-contact power transmission apparatus comprising an alternating-current power source and a resonant system, the resonant system including a primary coil connected to the alternating-current power source, a primary-side resonance coil, a secondary-side resonance coil, and a secondary coil to which a load is connected, the apparatus comprising:
a first capacitor that is connected in parallel to the primary-side resonance coil; and
a second capacitor that is connected in parallel to the secondary-side resonance coil, wherein
a first resonant frequency, which is a resonant frequency of the primary-side resonance coil and the first capacitor, and a second resonant frequency, which is a resonant frequency of the secondary-side resonance coil and the second capacitor, are set to be equal to each other, and
the frequency of an alternating voltage of the alternating-current power source is set to match with the first resonant frequency and the second resonant frequency.

2. The non-contact power transmission apparatus according to claim 1, wherein the first and second capacitors are variable capacitors.

3. A method for designing a non-contact power transmission apparatus comprising an alternating-current power source and a resonant system, the resonant system including a primary coil connected to the alternating-current power source, a primary-side resonance coil, a secondary-side resonance coil, and a secondary coil to which a load is connected, the method comprising:
connecting in parallel a first capacitor to the primary-side resonance coil;
connecting in parallel a second capacitor to the secondary-side resonance coil;
setting, to be equal to each other, a first resonant frequency, which is a resonant frequency of the primary-side resonance coil and the first capacitor, and a second resonant frequency, which is a resonant frequency of the secondary-side resonance coil and the second capacitor;
setting the specifications of the primary-side and secondary-side resonance coils and the specifications of the first and second capacitors;
calculating the first and second resonant frequencies; and
adjusting the frequency of an output voltage of the alternating-current power source to match with the first and second resonant frequencies.

4. A method for designing a non-contact power transmission apparatus comprising an alternating-current power source and a resonant system, the resonant system including a primary coil connected to the alternating-current power source, a primary-side resonance coil, a secondary-side resonance coil, and a secondary coil to which a load is connected, the method comprising:
connecting in parallel a first capacitor to the primary-side resonance coil;
connecting in parallel a second capacitor to the secondary-side resonance coil;
setting, to be equal to each other, a first resonant frequency, which is a resonant frequency of the primary-side resonance coil and the first capacitor, and a second resonant frequency, which is a resonant frequency of the secondary-side resonance coil and the second capacitor;
setting the frequency of an alternating voltage of the alternating-current power source and the specifications of the primary-side resonance coil and the secondary-side resonance coil; and
adjusting the capacitance values of the first and second capacitors such that the first and second resonant frequencies match with the frequency of the alternating voltage of the alternating-current power source.
